# EUROPEAN PATENT SPECIFICATION

(11) **EP 2 360 895 B1**
(45) Date of publication and mention of the grant of the patent: **16.12.2015**
(21) Application number: 09833277.8
(22) Date of filing: 08.10.2009
(51) Int. Cl.: H04M 1/02, H04M 1/23

(54) **CELLULAR PHONE**
MOBILTELEFON
TÉLÉPHONE CELLULAIRE

(30) Priority: 16.12.2008 JP 2008319718
(43) Date of publication of application: 24.08.2011
(60) Divisional application: 14169435.6
(73) Proprietor: NEC Corporation, Minato-ku Tokyo 108-8001 (JP)
(72) Inventor: TANAKA, Motoshi, Kodama-gun Saitama 367-0297 (JP)
(74) Representative: Glawe, Delfs, Moll
(86) International application number: PCT/JP2009/067528
(87) International publication number: WO 2010/070972

(56) References cited:
- JP-A- 2006 020 273
- US-A1- 2006 270 444
- US-A1- 2007 268 259

## Description

### Technical Field

The present invention relates to a cellular phone apparatus, and in particular, relates to the arrangement of an enter key.

### Background Art

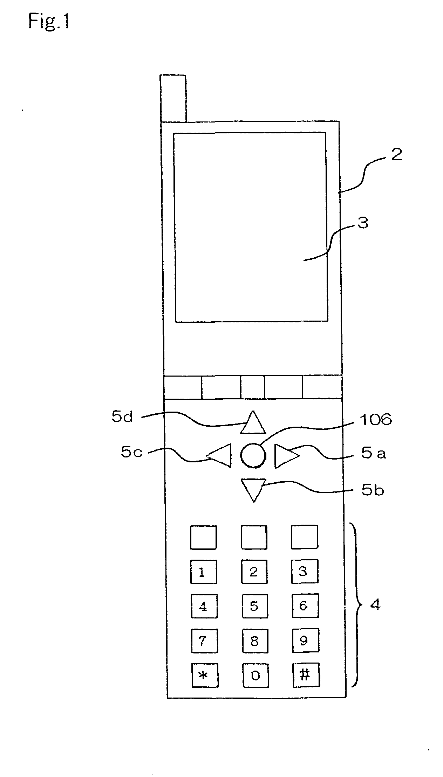

Fig. 1 is a front view of a cellular phone apparatus. The cellular phone apparatus typically includes digit keys 4 for inputting numerals etc., located in the lower part of casing 2, and cursor keys 5a, 5b, 5c, 5d located above digit keys 4. Cursor keys 5a, 5b, 5c, 5d are generally configured in four keys, *i.e.,* upper, lower, left and right keys, in order to move the cursor in the upward, downward, leftward and rightward directions on image display surface 3. Enter key 106 is located in the area that is surrounded by these keys. In order to select a phone number or a desired function (application) of the cellular phone apparatus, a user operates cursor keys 5a, 5b, 5c, 5d to move the cursor to a predetermined position, and then presses enter key 106. The selection of an item is accordingly completed, or the selected function is activated. Since cursor keys 5a, 5b, 5c, 5d and enter key 106 are concentrated in this manner, the cursor can be moved quickly and the enter key can be pressed quickly when the apparatus is operated with one hand (typically by the thumb of the right hand).

### Citation List

### Patent Documents

Patent Document 1: JP04-205514
Patent Document 2: JP2007-281659

Document US 2007/0268259 A1 discloses a cellular phone apparatus having four cursor keys surrounding a central select key and a separate enter key. Document US 2006/0270444 A1 discloses a cellular phone apparatus having a four or five way navigational key and a separate enter key on a second keypad.

### Summary of Invention

### Problem to be Solved

Cellular phone apparatuses may be operated with both hands, depending on users, although they are generally operated with one hand. There is also a need to operate the cellular phone apparatuses with both hands in order to quickly move the cursor and to quickly press the enter key. However, because of the concentrated arrangement of the cursor keys and the enter key, both hands may interfere with each other and thereby a smooth operation may be difficult when the cursor keys are operated with one hand and the enter key is operated with the other hand. The present invention has been made in view of the problem, and aims at providing a cellular phone apparatus that enables a smooth operation of cursor keys and an enter key with both hands.

### Solution to Solve the Problem

A cellular phone apparatus according to the invention is defined by claim 1.

### Effects of Invention

The first enter key is located inside the virtual annular line, *i.e*., at a position that is surrounded by the cursor keys. Thus, the cursor keys and the first enter key can be as smoothly and continuously operated with one hand as the enter key of the current cellular phone apparatus. On the other hand, the second enter key, which is located outside the virtual annular line, is less likely to cause operational interference with the cursor keys. Accordingly, it is possible to smoothly operate the cursor keys with one hand and to smoothly operate the second enter key with the other hand.

### Brief Description of Drawings

Fig. 1 is a front view showing a cellular phone apparatus according to a related art.
Fig. 2 is a front view showing a cellular phone apparatus according to an embodiment of the present invention.
Fig. 3 shows the cellular phone apparatus shown in Fig. 1 that is being operated with both hands.
Fig. 4 shows the cellular phone apparatus shown in Fig. 2 that is being operated with both hands.
Fig. 5 shows the cellular phone apparatus shown in Fig. 2 that is being operated with both hands.

### Explanation of Reference Numerals

- 1: Cellular phone apparatus
- 2: Casing
- 3: Image display surface
- 4: Digit key
- 5a, 5b, 5c, 5d: Cursor key
- 6a: First enter key
- 6b: Second enter key
- 7a, 7b: Key
- 10: Operation surface
- c: Virtual annular line
- d1, d2: Distance

### Embodiments of the Invention

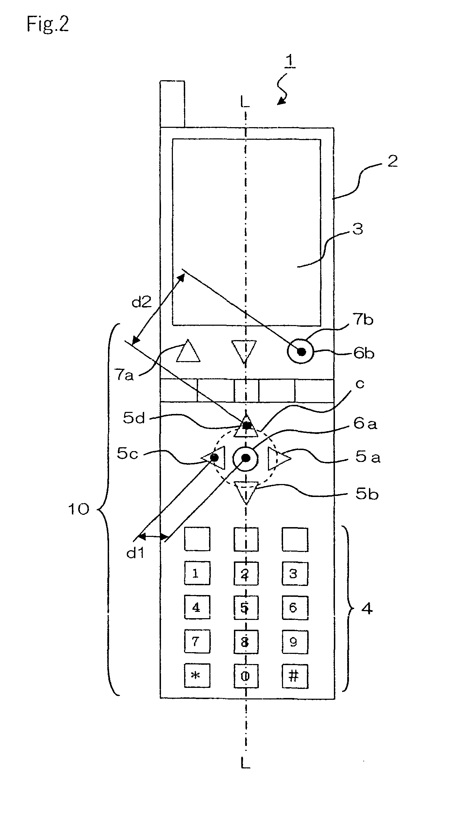

Hereinafter, a cellular phone apparatus according to an embodiment of the present invention is described with reference to the drawings. Fig. 2 is a front view of the cellular phone apparatus.

Cellular phone apparatus 1 includes image display surface 3 located in the upper part of casing 2 and various keys located on operation surface 10 of casing 2. The various keys consist of digit keys 4 that are used for inputting numerals etc., cursor keys 5a, 5b, 5c, 5d for moving a cursor (not shown) in any desired direction on image display surface 3, first and second enter keys 6a, 6b and so on.

Cursor keys 5a, 5b, 5c, 5d are located on operation surface 10 such that they surround first enter key 6a. The cursor keys move the cursor in any desired direction, typically in the upward, downward, leftward and rightward directions, and consist of four keys 5a, 5b, 5c, 5d each corresponding to each direction. However, five or more keys may be provided in order to move the cursor in an oblique direction. Cursor keys 5a, 5b, 5c, 5d are formed in separate buttons in this embodiment, but the cursor keys may be formed as a ring type button that moves the cursor in the upward, downward, leftward and rightward directions according to the angular position at which the button is pressed. Cursor keys 5a, 5b, 5c, 5d are concentrated in order to ensure good operability. Specifically, cursor keys 5a, 5b, 5c, 5d are arranged adjacent to each other along virtual annular line c. Virtual annular line c is circular in this embodiment, but may be elliptical. In this embodiment, first enter key 6a is located at the center of the circular area that is defined by the circular virtual annular line c.

Second enter key 6b is provided on operation surface 10 outside virtual annular line c that connects four cursor keys 5a, 5b, 5c, 5d. By pressing either first enter key 6a or second enter key 6b, the position of the cursor is determined, or a predetermined function designated by the cursor is activated. The functions of enter keys 6a, 6b are completely identical in this embodiment, but may be partially different from each other.

In view of operability with both hands, second enter key 6b is located apart from cursor keys 5a, 5b, 5c, 5d. Specifically, distance d2 between the cursor key that is closest to second enter key 6b (cursor key 5d shown in Fig. 2) and second enter key 6b is larger than distance d1 between the cursor key that is farthest from first enter key 6a among the four cursor keys and first enter key 6a. In Fig. 2, all cursor keys 5a, 5b, 5c, 5d are located at the same distance from first enter key 6a, and hence all the cursor keys are "the farthest cursor keys".

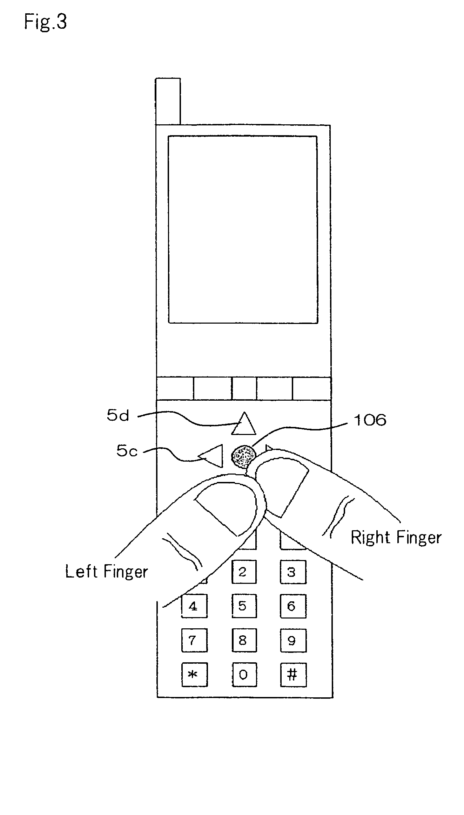

Fig. 3 shows the current cellular phone apparatus shown in Fig. 1 that is being operated with both hands. Since the cursor keys (only 5c and 5d are shown) and enter key 106 are arranged close to each other, the right hand and the left hand overlap each other, for example, when cursor keys 5a, 5b, 5c, 5d are operated with the left hand and enter key 106 is operated with the right hand. As a result, the operability during operation with both hands is significantly worsened.

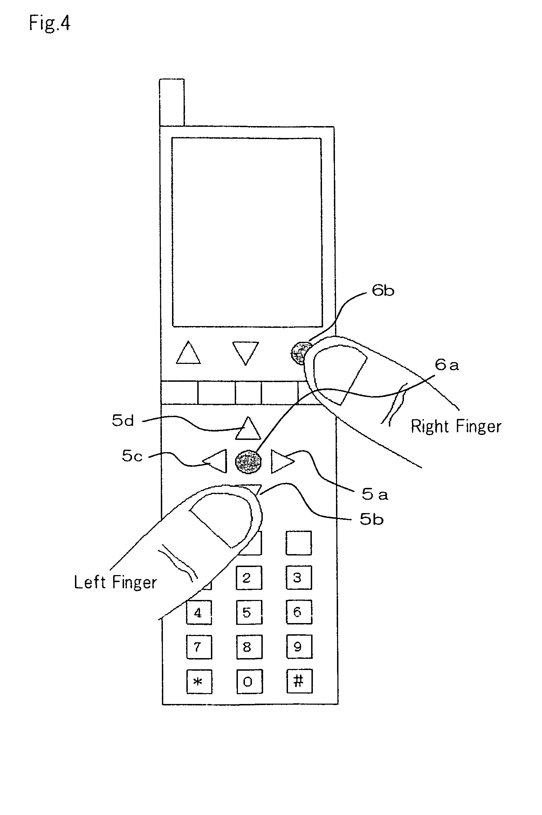

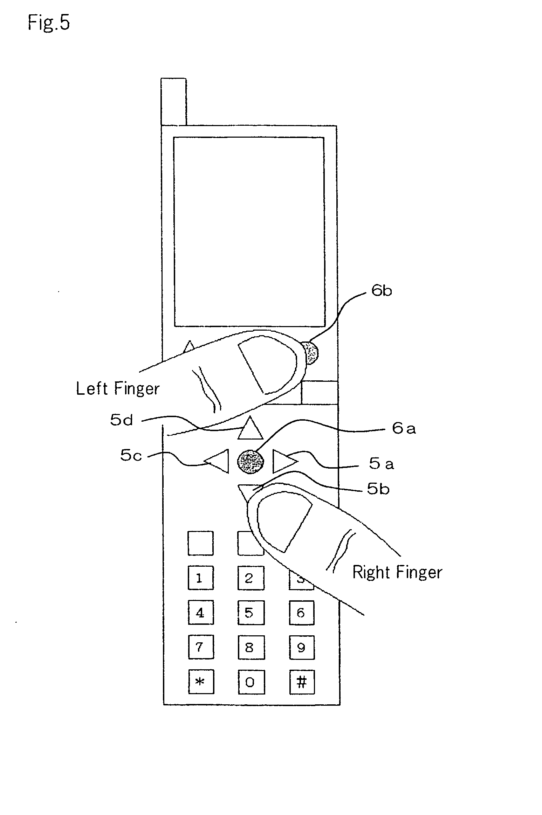

Figs. 4 and 5 show the cellular phone apparatus according to the embodiment shown in Fig. 2 that is being operated with both hands. In Fig. 4, the cursor keys and the digit keys are operated with the left hand while the enter key is operated with the right hand, and in Fig. 5, the cursor keys and the digit keys are operated with the right hand while the enter key is operated with the left hand. Second enter key 6b that is additionally mounted allows the operation of the cursor keys etc. and the operation of the enter key to be allocated to the right hand and to the left hand, enabling a quick operation as compared with performing all the operations with one hand. Since second enter key 6b that is additionally mounted is placed at a position that does not affect the operation of the cursor keys, the right hand and the left hand do not overlap each other when the enter key and the cursor keys are operated with both hands, and the operation can be quicker. By arranging second enter key 6b apart from the other buttons, accidental pressing of adjacent buttons when the enter key is to be operated can be avoided.

It is also possible to only use first enter key 6a instead of using second enter key 6b. In this case, all the keys can be operated with one hand with the same operability as the current cellular phone apparatuses. If first enter key 6a is not provided and only second enter key 6b is provided, then extensive movement of a finger, which leads to bad operability, is required when the enter key and the cursor keys are repeatedly operated with one hand, especially when second enter key 6b is apart from cursor keys 5a, 5b, 5c, 5d.

Cellular phone apparatus 1 further has means for inactivating key functions (not shown) that temporarily inactivate the functions of either first enter key 6a or second enter key 6b. When a user prefers using the cellular phone apparatus with the same operability as the operability of a conventional apparatus, the user may temporarily inactivate the functions of second enter key 6b. When a user tends to accidentally press adjacent cursor keys 5a, 5b, 5c, 5d during an operation to press first enter key 6a due to, for example, a large hand size, the user may temporarily inactivate first enter key 6a. The term "temporary" means that the function that has been inactivated can be recovered. The term "temporary" also includes permanently using the apparatus while keeping the functions of one of the enter keys inactive according to user's preference.

Based on the user's preference, such as the dominant hand, it is possible to selectively allocate "the operation of enter key" and "the operation of cursor keys and the digit keys" to one hand and to the other hand, respectively. For this purpose, cellular phone apparatus 1 has means for allocating second enter key (not shown). Referring to Fig. 2, the means for allocating second enter key selectively allocates one key out of two keys 7a, 7b as second enter key 6b. Two keys 7a, 7b are located on both sides of cellular phone apparatus 1 with respect to axis L-L that connects the center of image display surface 3 and the center of operation surface 10. Axis L-L may typically be the long axis of the cellular phone apparatus, but may be the short axis thereof when the cellular phone apparatus has a laterally wider operation surface. Second enter key is one of the two keys, the one being allocated by the means for allocating second enter key. In Fig. 2, key 7b is allocated as second enter key 6b. The means for allocating second enter key may be configured as a switching button (not shown) that is located on the side surface or on the back surface of casing 2, or may be configured as software that works through the operation of the cursor.

The present invention has been described in detail with reference to the embodiments. However, it should be understood that various changes and modifications can be made within the scope of the claims.

## Claims

1. A cellular phone apparatus (1) comprising:
an image display surface (3);
a first enter key (6a) that is located on an operation surface (10);
at least four cursor keys (5a, 5b, 5c, 5d) for moving a cursor in any desired direction on the image display surface (3), the cursor keys (5a, 5b, 5c, 5d) being located on the operation surface (10) such that the cursor keys (5a, 5b, 5c, 5d) surround the first enter key (6a); and
a second enter key (6b) that is located outside a virtual annular line (c), the virtual annular line connecting the four cursor keys (5a, 5b, 5c, 5d) on the operation surface (10),
wherein functions of the first and second enter keys (6a, 6b) are completely identical,
the cellular phone apparatus (1) further comprises means for inactivating key functions that temporarily inactivates the functions of either the first enter key (6a) or the second enter key (6b), and
further comprising means for allocating a second enter key that selectively allocates one key out of two keys (7a, 7b) as the second enter key (6b), the two keys (7a, 7b) being located on both sides with respect to an axis (L-L) that connects a center of the image display surface (3) and a center of the operation surface (10), respectively,
wherein the second enter key (6b) is one of the two keys (7a, 7b), the one being allocated by the means for allocating the second enter key.

2. The cellular phone apparatus (1) according to claim 1, wherein a distance between a cursor key that is closest to the second enter key (6b) among the at least four cursor keys (5a, 5b, 5c, 5d) and the second enter key (6b) is larger than a distance between a cursor key that is farthest from the first enter key (6a) among the at least four cursor keys (5a, 5b, 5c, 5d) and the first enter key (6a).

## Patentansprüche

1. Mobiltelefonapparat (1), der Folgendes umfasst:
eine Bildanzeigeoberfläche (3);
eine erste Eingabetaste (6a), die auf einer Bedienungsoberfläche (10) angeordnet ist;
mindestens vier Cursor-Tasten (5a, 5b, 5c, 5d) zum Bewegen eines Cursors in irgendeiner gewünschten Richtung auf der Bildanzeigeoberfläche (3), wobei die Cursor-Tasten (5a, 5b, 5c, 5d) auf der Bedienungsoberfläche (10) so angeordnet sind, dass die Cursortasten (5a, 5b, 5c, 5d) die erste Eingabetaste (6a) umgeben; und
eine zweite Eingabetaste (6b), die außerhalb einer virtuellen ringförmigen Linie (c) angeordnet ist, wobei die virtuelle ringförmige Linie die vier Cursor-Tasten (5a, 5b, 5c, 5d) auf der Bedienungsoberfläche (10) verbindet,
wobei die Funktionen der ersten und zweiten Eingabetaste (6a, 6b) vollständig identisch sind,
der Mobiltelefonapparat (1) weiter ein Mittel zum Inaktivieren von Tastenfunktionen umfasst, das die Funktionen von entweder der ersten Eingabetaste (6a) oder der zweiten Eingabetaste (6b) inaktiviert, und
weiter ein Mittel zum Zuordnen einer zweiten Eingabetaste umfasst, das selektiv eine von zwei Tasten (7a, 7b) als die zweite Eingabetaste (6b) zuordnet, wobei die zwei Tasten (7a, 7b) hinsichtlich einer Achse (L-L), die jeweils einen Mittelpunkt der Bildanzeigeoberfläche (3) und einen Mittelpunkt der Bedienungsoberfläche (10) verbindet, auf beiden Seiten angeordnet sind,
wobei die zweite Eingabetaste (6b) eine der zwei Tasten (7a, 7b) ist, wobei die eine Taste durch das Mittel zum Zuordnen der zweiten Eingabetaste zugeordnet wird.

2. Mobiltelefonapparat (1) gemäß Anspruch 1, wobei ein Abstand zwischen einer Cursor-Taste, die unter den mindestens vier Cursor-Tasten (5a, 5b, 5c, 5d) der zweiten Eingabetaste (6b) am nächsten ist, und der zweiten Eingabetaste (6b) größer als ein Abstand zwischen einer Cursortaste, die unter den mindestens vier Cursor-Tasten (5a, 5b, 5c, 5d) von der ersten Eingabetaste (6a) am weitesten entfernt ist, und der ersten Eingabetaste (6a) ist.

## Revendications

1. Appareil de téléphone cellulaire (1) comprenant :
une surface d'affichage d'image (3) ;
une première touche entrée (6a) qui est située sur une surface opérationnelle (10) ;
au moins quatre touches curseurs (5a, 5b, 5c, 5d) destinées à déplacer un curseur dans toute direction souhaitée sur la surface d'affichage d'image (3), les touches curseurs (5a, 5b, 5c, 5d) étant situées sur la surface opérationnelle (10) de sorte que les touches curseurs (5a, 5b, 5c, 5d) entourent la première touche entrée (6a) ; et
une seconde touche entrée (6b) qui est située à l'extérieur d'une ligne annulaire virtuelle (c), la ligne annulaire virtuelle raccordant les quatre touches curseurs (5a, 5b, 5c, 5d) sur la surface opérationnelle (10),
dans lequel des fonctions des première et seconde touches entrée (6a, 6b) sont complètement identiques,
l'appareil de téléphone cellulaire (20) comprend en outre un moyen permettant de désactiver des fonctions de touche qui désactive temporairement les fonctions soit de la première touche entrée (6a), soit de la seconde touche entrée (6b), et
comprenant en outre un moyen permettant d'allouer une seconde touche entrée qui alloue sélectivement une touche parmi deux touches (7a, 7b) en tant que seconde touche entrée (6b), les deux touches (7a, 7b) étant situées des deux côtés par rapport à un axe (L-L) qui raccorde un centre de la surface d'affichage d'image (3) et un centre de la surface opérationnelle (10), respectivement,
dans lequel la seconde touche entrée (6b) est l'une des deux touches (7a, 7b), l'une étant allouée grâce au moyen permettant d'allouer la seconde touche entrée.

2. Appareil de téléphone cellulaire (1) selon la revendication 1, dans lequel une distance entre une touche curseur qui est la plus proche de la seconde touche entrée (6b) parmi les au moins quatre touches curseurs (5a, 5b, 5c, 5d) et la seconde touche entrée (6b) est plus grande qu'une distance entre une touche curseur qui est la plus éloignée de la première touche entrée (6b) parmi les au moins quatre touches curseurs (5a, 5b, 5c, 5d) et la première touche entrée (6a).
